Europäisches Patentamt

European Patent Office

Office européen des brevets

(11) Numéro de publication: **0 481 850 B1**

# FASCICULE DE BREVET EUROPEEN

(45) Date de publication de fascicule du brevet: **14.12.94** (51) Int. Cl.5: **B29C 63/20**, B23P 11/02

(21) Numéro de dépôt: **91402701.6**

(22) Date de dépôt: **09.10.91**

(54) **Procédé pour fretter et maintenir sous pression un noyau par une enveloppe en matériau composite et appareillage pour la mise en oeuvre d'un tel procédé.**

(30) Priorité: **17.10.90 FR 9012841**

(43) Date de publication de la demande:
**22.04.92 Bulletin 92/17**

(45) Mention de la délivrance du brevet:
**14.12.94 Bulletin 94/50**

(84) Etats contractants désignés:
**AT BE CH DE DK ES GB IT LI NL SE**

(56) Documents cités:
**EP-A- 0 212 130
EP-A- 0 344 025
DE-A- 3 821 852
GB-A- 1 046 856
GB-A- 1 313 634**

**PATENT ABSTRACTS OF JAPAN vol. 9, no. 25 (M-355)(1748) 2 Février 1985 & JP-A-59 171 613 ( HITACHI ) 28 Septembre 1984**

(73) Titulaire: **AEROSPATIALE Société Nationale Industrielle
37, Boulevard de Montmorency
F-75781 Paris Cédex 16 (FR)**

(72) Inventeur: **Metivaud, Guy
5 avenue du Président Poincaré
F-33400 Talence (FR)**
Inventeur: **Auberon, Marcel
14 allée Pasten
F-33160 Le Haillan (FR)**

(74) Mandataire: **Chassagnon, Jean-Alain et al
Cabinet Harlé et Phélip
21, rue de la Rochefoucauld
F-75009 Paris (FR)**

## Description

L'invention est relative à un procédé pour fretter et maintenir sous pression un noyau par une enveloppe extérieure.

Ce procédé est destiné à la réalisation de dispositifs nécessitant une enveloppe extérieure pour bloquer un noyau central. L'enveloppe extérieure doit alors exercer une pression radiale sur le noyau central, pour le maintenir en place et pour éventuellement limiter les déformations du noyau qui peut être soumis à des forces ayant tendance à écarter l'enveloppe.

En particulier, l'invention vise un procédé permettant de fretter et de maintenir sous pression un noyau soumis à des sollicitations importantes, ces sollicitations pouvant être radiales et/ou longitudinales et/ou circonférentielles, et nécessitant donc des tenues en pression interne adéquates (par exemple de l'ordre de 300 à 1000 bars), le noyau pouvant présenter une longueur pouvant atteindre plusieurs mètres.

Le procédé selon l'invention doit ainsi permettre de réaliser des tubes de canalisations soumis à des pressions et/ou des contraintes dynamiques radiales et/ou longitudinales et/ou circonférentielles internes relativement importantes.

Le procédé selon l'invention est aussi conçu pour pouvoir fretter un noyau par une enveloppe dans le cas où le noyau et/ou l'enveloppe sont réalisés dans des matériaux présentant de faibles coefficients de dilatation thermique et où le frettage ne peut pas être réalisé en utilisant un phénomène de dilatation thermique.

Le procédé selon l'invention est plus particulièrement applicable au frettage d'un noyau, métallique ou non, par une enveloppe extérieure en matériau non métallique, ce noyau et cette enveloppe présentant des formes quelconques. Cette enveloppe peut être plus particulièrement réalisée en matériau composite et obtenue par enroulement filamentaire de fibres imprégnées d'un matériau liant polymérisable.

On connait déjà des procédés de frettage avec un matériau composite, dans lesquels on réalise un enroulement filamentaire directement sur l'objet à fretter. En particulier, la demande de brevet EP-A-0 344 025, déposée au nom de la demanderesse, décrit un procédé utilisant la technique de l'enroulement filamentaire pour réaliser des récipients pour le stockage de fluides sous pression. L'efficacité du frettage n'intervient que lorsque le récipient est soumis à une pression interne.

Les procédés dans lesquels est réalisé un enroulement filamentaire directement sur l'objet à fretter présentent des limites et des inconvénients.

Lorsque le matériau composite réalisant le frettage est composé de fibres liées par une résine thermodurcissable, après bobinage des fibres préimprégnées de résine ou encore après imprégnation des fibres bobinées à l'état sec, on procède à la polymérisation du matériau composite. Celle-ci est réalisée par élévation de la température en étuve. On constate que la tension des fibres, lors du bobinage, doit être inférieure à la limite de résistance à la traction des fibres. De plus, la tension obtenue peut se relâcher lors de la polymérisation. En conséquence, la tension résiduelle des fibres ne peut être que très inférieure à la limite de résistance à la traction des fibres. Les procédés de frettage dans lesquels on réalise un enroulement filamentaire directement sur l'objet à fretter ne peuvent donc pas convenir pour des noyaux soumis à des efforts radiaux et/ou longitudinaux et/ou circonférentiels relativement importants et nécessitant des tenues en pression interne correspondantes.

On peut par contre envisager d'utiliser ce type de procédé avec des matériaux composites thermoplastiques, de façon à éviter l'étape de polymérisation. Dans ce cas, le bobinage est réalisé avec des fibres imprégnées d'un liant thermoplastique chauffé.

On constate qu'un tel procédé présente aussi des inconvénients. Le collage des fibres thermoplastiques par chauffage est obtenu au fur et à mesure de leur dépôt sur l'objet à fretter. En conséquence, s'il est possible de contrôler la tension des fibres au moment de leur dépôt, il est difficile d'ajuster la tension des fibres dans l'empilement de couches. En effet, les contraintes de mise en oeuvre sont importantes et empêchent d'optimiser les frettages obtenus. L'optimisation nécessiterait en effet un calcul très complexe car d'une part, les premières couches de fibres se détendent dans le cas d'un noyau compressible, ce qui rend difficile le contrôle de la pression et d'autre part, la circulation et la répartition de la résine sont difficilement contrôlables. C'est pourquoi le nombre de couches de fibres réalisées pour obtenir la pression de frettage désirée peut être très supérieur à celui théoriquement nécessaire. Enfin, les matériaux thermoplastiques sont encore peu diffusés et les plus performants sont très onéreux.

On connait un procédé permettant de bloquer un noyau sensiblement cylindrique pouvant être soumis à des pressions internes importantes, sans réaliser un enroulement filamentaire directement sur le noyau. Dans ce procédé, le noyau est placé dans une enveloppe extérieure, elle aussi sensiblement cylindrique et de préférence non métallique. L'espace entre le noyau et l'enveloppe extérieure est rempli par un fluide sous pression. La pression du fluide est réglée par l'intermédiaire de pistons. Le noyau est ainsi maintenu en place par le fluide sous pression qui l'entoure. L'enveloppe extérieure peut être réalisée en matériau composite et le fluide sous pression peut être une résine, éventuellement durcie, la pression étant maintenue pendant son durcissement.

Ce procédé permet d'éviter les inconvénients liés à la réalisation d'un enroulement filamentaire direct, mais il en présente d'autres.

En effet, pour maintenir sous pression des noyaux relativement longs et donc obtenir une bonne répartition du fluide le long du noyau, il est nécessaire de prévoir un jeu assez important entre l'enveloppe extérieure et le noyau et/ou plusieurs points d'injection du fluide sous pression. La présence d'un jeu important pour l'injection du fluide à laquelle s'ajoute l'augmentation du diamètre de l'enveloppe extérieure sous l'effet de la pression interne, entraîne des épaisseurs de fluide entre l'enveloppe et le noyau relativement importantes. En conséquence, il peut se produire un relâchement de la pression dans le cas où le fluide sous pression est une résine, du fait du fluage dans le temps de la résine après polymérisation. De plus, si l'épaisseur de résine est trop importante, un risque d'écrasement de celle-ci peut apparaître. La nécessité de prévoir plusieurs points d'injection de résine impose la réalisation d'un circuit de circulation du fluide entre le noyau et l'enveloppe extérieure. La présence de ce circuit peut être gênante dans certaines utilisations.

On connaît également un procédé permettant de maintenir en place un noyau dans une enveloppe extérieure métallique. Ce procédé consiste à introduire en force un noyau dans une enveloppe métallique dont le diamètre interne est inférieur au diamètre externe du noyau. Des efforts de traction très importants doivent être exercés sur l'enveloppe extérieure. Ce procédé n'est donc pas utilisable lorsque l'enveloppe extérieure est réalisée en matériau composite. En effet, les efforts de traction exercés entraîneraient des détériorations du matériau composite composant l'enveloppe, par arrachement des fibres lors de l'introduction en force du noyau.

Enfin, la demande de brevet européen N° 212130 se rapporte au frettage d'une pièce tubulaire par un cylindre d'armature en matériau composite en obtenant l'expansion du cylindre d'armature et la compression de la pièce tubulaire par la mise sous pression à l'aide d'un fluide.

La pièce tubulaire est introduite dans le cylindre d'armature de la manière suivante. Le fluide sous pression, en particulier un liquide, est introduit dans un boitier de montage au moyen d'alésages de raccordement. Ce fluide réduit le diamètre de la pièce tubulaire tout en élargissant le diamètre intérieur du cylindre d'armature. Dès que le diamètre intérieur du cylindre d'armature est plus grand que le diamètre extérieur de la pièce tubulaire, on agit sur une tige de commande de façon à ce que le cylindre d'armature entoure la pièce tubulaire. Après introduction de la pièce tubulaire dans le cylindre d'armature, on arrête l'introduction du fluide sous pression. La partie tubulaire se dilate et le diamètre du cylindre d'armature diminue, de sorte que celui-ci repose de façon fixe et avec la contrainte souhaitée sur la partie tubulaire.

Le fait de mettre en expansion le cylindre d'armature avec mise en compression de la pièce tubulaire et d'effectuer ensuite l'introduction de cette pièce tubulaire dans le cylindre d'armature nécessitent un appareillage très complexe. Pour obtenir l'action de la pression sur toute la longueur, cet appareillage demande des mises au point délicates, très difficiles à réaliser et, de surcroît, elles ne sont pas décrites dans le document.

Cette solution, ne répond pas à la possibilité de réaliser, à coût réduit, des tubes de grandes longueurs et de plus, pose trop de problèmes de mise en oeuvre comme par exemple l'étanchéité sur une enveloppe en matériau composite, qui n'a pas de tolérances dimensionnelles très précises. L'outillage est très compliqué et difficile à réaliser. De plus, ce document ne décrit pas comment résoudre les problèmes d'étanchéité lors de la mise en oeuvre du procédé. En effet, dans ce dispositif, il y a incompatibilité entre le centrage, l'étanchéité et la dilatation de par le type d'encastrement choisi, qui est lié au centrage. La réduction du diamètre de la pièce tubulaire au niveau des encastrements sur le montage, de même que l'augmentation du diamètre du cylindre d'armature encastré dans le montage, semblent particulièrement délicates et en tout état de cause ne sont pas bien précisées. De fait, s'il y a étanchéité, il y a centrage, et s'il y a centrage, on ne peut pas avoir de dilatation ou de retreint; donc on ne voit pas comment on peut résoudre à la fois les problèmes de centrage, d'étanchéité de dilatation et de retreint.

L'invention a pour objet de pallier ces inconvénients en proposant un procédé pour fretter et maintenir sous pression un noyau par l'intermédiaire d'une enveloppe en matériau composite, ladite enveloppe en matériau composite ayant une section interne qui est avant introduction du noyau, inférieure à la section interne du noyau, permettant d'éviter tout glissement du noyau par rapport à l'enveloppe extérieure en présence de sollicitations instantanées relativement importantes, que ces sollicitations soient radiales et/ou longitudinales et/ou circonférentielles.

Selon l'invention, le procédé consiste à:
maintenir l'une des extrémités de l'enveloppe à l'aide d'une embase,
aligner ledit noyau et ladite enveloppe, par son autre extrémité, en les centrant sensiblement l'un vis-à-vis de l'autre;

exercer un effort de traction préalable sur ledit noyau en direction de l'enveloppe et prévoir, dans le cas d'un noyau creux et ouvert dans le sens axial, des moyens d'obstruction étanche, de façon à assurer une étanchéité convenable entre la partie en contact de chacune des extrémités du noyau et de l'enveloppe;

injecter un fluide sous pression dans ladite enveloppe et en direction dudit noyau, afin de créer une pression entre le noyau et l'enveloppe et afin d'augmenter progressivement, en se déplaçant dans le sens axial, la section de l'enveloppe et, éventuellement, de réduire la section du noyau, et simultanément continuer d'exercer un effort de traction sur ledit noyau, de façon à introduire au fur et à mesure ledit noyau dans ladite enveloppe; arrêter l'injection de fluide après introduction complète du noyau dans l'enveloppe; découper la partie perdue de l'enveloppe tenue par l'embase.

Ce procédé présente donc l'avantage de permettre la mise en expansion de l'enveloppe extérieure préalablement réalisée, au fur et à mesure de l'introduction du noyau dans l'enveloppe et/ou la mise en compression du noyau. Le procédé utilise donc la capacité d'expansion de l'enveloppe en matériau composite et/ou la capacité de compression du noyau pour permettre l'introduction du noyau dans l'enveloppe. Ce procédé permet donc de fretter et de maintenir sous pression un noyau par une enveloppe extérieure sans avoir à recourir à des phénomènes de dilatation thermique.

Avantageusement, le procédé consiste de plus, avant d'aligner et de centrer ladite enveloppe et ledit noyau, à réaliser des formes coniques complémentaires sur les parties en contact, une forme conique étant sur l'extrémité de l'enveloppe et une forme conique étant sur l'extrémité du noyau, de manière que le centrage et l'étanchéité convenable entre le noyau et l'enveloppe soient réalisés en engageant les formes coniques l'une dans l'autre.

L'enveloppe et la surface externe du noyau peuvent présenter des formes quelconques.

De façon préférée, la surface interne et/ou la surface externe de l'enveloppe est(sont) une surface de révolution. En effet, lorsque l'enveloppe est un corps de révolution, l'injection du fluide provoque l'expansion de l'enveloppe extérieure de façon uniforme et celle-ci n'est pas déformée.

Dans la présente demande, le fait que l'enveloppe ne subit pas de déformation par l'injection de fluide sous pression signifie qu'en tout point, la section de l'enveloppe avant injection du fluide et celle après injection du fluide sont homothétiques.

Ainsi, lorsque l'enveloppe n'est pas un corps de révolution, il peut s'avérer nécessaire de maintenir l'enveloppe durant l'injection de fluide sous pression, pour limiter sa déformation.

La surface externe du noyau peut également être une surface de révolution.

En particulier, au moins une de ces surfaces peut être cylindrique. C'est notamment le cas lorsque l'enveloppe et/ou le noyau sont des tubes.

En particulier, au moins une de ces surfaces peut-être tronconique. On comprend que cette forme particulière facilite l'introduction du noyau dans l'enveloppe extérieure.

De préférence, la surface interne de l'enveloppe et la surface externe du noyau sont homothétiques. Cette forme de réalisation est avantageuse, car dans ce cas le frettage est réalisé par l'enveloppe extérieure elle-même et non en partie par le fluide injecté.

C'est pourquoi, lorsque la surface interne de l'enveloppe et la surface externe du noyau ne sont pas homothétiques, il peut être avantageux de réaliser, avant d'aligner le noyau et l'enveloppe, un habillage du noyau de façon à ce que la surface interne de l'enveloppe et la surface externe du noyau soient homothétiques.

De préférence, le fluide sous pression qui est injecté est un fluide lubrifiant, afin de faciliter l'introduction du noyau dans l'enveloppe.

On peut en particulier choisir comme fluide lubrifiant une résine polymérisable.

Dans ce cas, après introduction complète du noyau dans l'enveloppe et l'arrêt de l'injection du fluide sous pression, le procédé peut consister de plus à polymériser la résine résiduelle présente entre la surface interne de l'enveloppe et la surface externe du noyau. Cette étape supplémentaire du procédé permet d'assurer le collage du noyau sur la surface interne de l'enveloppe en matériau composite.

L'enveloppe externe en matériau composite peut être obtenue par tout procédé adéquat. En particulier, on peut la réaliser en enroulant des fibres imprégnées de résine polymérisable sur un support puis en les polymérisant.

L'enveloppe comprend au moins une couche de fibres enroulées. Cependant, l'épaisseur de l'enveloppe peut être variable. Ceci est avantageux dans le cas où le noyau n'est pas soumis à des sollicitations internes identiques d'une section du noyau à une autre. Le noyau peut par exemple être soumis dans une zone particulière à une pression interne plus importante qu'ailleurs, on réalise alors l'enveloppe extérieure de telle sorte qu'elle présente une épaisseur plus importante dans cette zone de façon à compenser cette surpression localisée.

Dans le même but, l'enveloppe peut être réalisée en des matériaux différents suivant la pression interne de la zone correspondante du noyau.

Les fibres utilisées pour réaliser l'enveloppe sont des fibres organiques ou minérales à haute résistance mécanique telles que des fibres de carbone, de verre, de silice, de bore ou aramides.

L'invention concerne de plus un appareillage permettant la mise en oeuvre du procédé selon l'invention.

Cet appareillage comprend une tige coulissante de diamètre inférieur à la section de l'enveloppe, destinée à être raccordée au noyau et à être placée dans l'enveloppe de telle sorte qu'un espace soit ménagé entre la surface externe de la tige et la surface interne de l'enveloppe. La tige est percée d'au moins un canal longitudinal et au moins un canal radial, le canal longitudinal étant en communication avec cet espace par l'intermédiaire du canal radial. Cet appareillage comprend de plus un système assurant l'étanchéité entre l'enveloppe et la tige, des moyens pour exercer un effet de traction sur la tige par rapport à l'enveloppe et un dispositif générant un fluide sous pression. Ce dernier dispositif est relié au(x)dit(s) canal(aux) longitudinal(aux) pour permettre l'introduction du fluide sous pression dans l'espace compris entre la surface externe de la tige et la surface interne de l'enveloppe.

L'invention sera mieux comprise et d'autres buts, avantages et caractéristiques de celle-ci apparaîtront plus clairement à la lecture de la description qui suit de modes préférés de réalisation, faite en référence aux dessins sur lesquels :

- la figure 1 représente un appareillage pour la mise en oeuvre du procédé selon l'invention, un noyau et une enveloppe extérieure, avant introduction du noyau dans l'enveloppe extérieure,
- la figure 2 représente l'appareillage, le noyau et l'enveloppe extérieure de la figure 1 pendant l'introduction du noyau dans l'enveloppe extérieure qui est munie d'un tube de maintien de calibrage extérieur de l'enveloppe,
- la figure 3 représente une vue similaire à la figure 1, en fin d'introduction du noyau dans l'enveloppe extérieure,
- la figure 4 représente une vue similaire à la figure 1, le noyau étant complètement introduit dans l'enveloppe extérieure, et
- la figure 5 représente un exemple particulier de noyau fretté par une enveloppe, conformément au procédé selon l'invention.

Les éléments communs aux différentes figures seront désignés par les mêmes références.

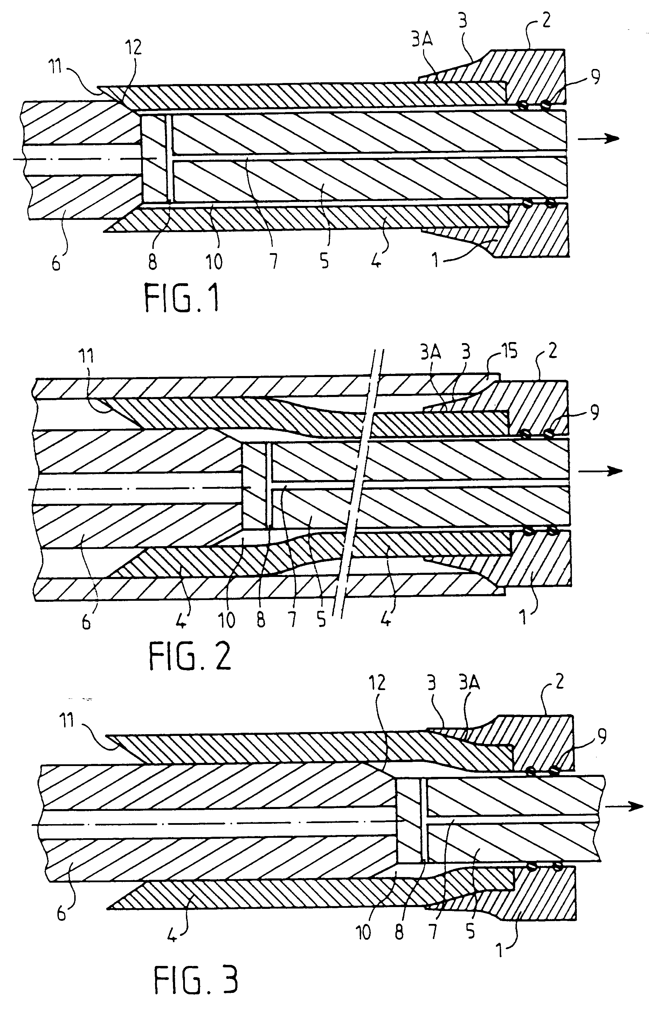

En référence maintenant à la figure 1, l'appareillage permettant la mise en oeuvre du procédé selon l'invention comprend un premier dispositif 1 ou embase qui est creux et présente une forme générale extérieure cylindrique. Cette embase 1 comporte une première partie 2 dont la surface interne est sensiblement cylindrique et une deuxième partie 3 dont la surface interne forme un décrochement 3A . Ce décrochement 3A permet l'introduction et le maintien dans l'embase 1 d'une enveloppe extérieure 4 en matériau composite.

L'appareillage comporte de plus une tige 5. Cette tige est sensiblement cylindrique et sa section est inférieure à la section interne de la première partie 2 de l'embase 1 ainsi qu'à celle de l'enveloppe 4 en matériau composite. Ainsi, un espace 10 est ménagé entre la surface externe de la tige coulissante 5 et la surface interne de l'enveloppe extérieure 4 et de l'embase 1.

Cette tige est destinée à être raccordée à un noyau 6, par exemple métallique, qui doit être introduit dans l'enveloppe 4 en matériau composite conformément au procédé selon l'invention. De tels moyens de raccordement sont connus de l'homme de l'art et ne seront pas ici décrits en détail.

Comme représenté à la figure 1, la tige 5 est percée d'au moins un canal longitudinal 7 et au moins un canal radial 8. Le canal longitudinal 7 est en communication avec l'espace 10 par l'intermédiaire du canal radial 8.

Cet appareillage comprend de plus un dispositif générant un fluide sous pression. Ce dispositif est relié à l'extrémité du canal longitudinal 7, située du côté opposé au noyau et n'est pas représenté sur les figures.

L'embase 1 assure de plus l'étanchéité avec la tige 5 grâce à un système 9 placé au niveau de la première partie 2 de l'embase 1 et qui peut notamment consister en des joints.

La tige 5 est prévue pour pouvoir coulisser à l'intérieur de l'enveloppe 4 et de l'embase 1. Il est donc prévu un dispositif, non représenté sur la figure, qui permet d'imprimer un mouvement à la tige, sensiblement dans la direction de l'axe de l'enveloppe extérieure 4 et de l'embase 1.

Conformément au procédé selon l'invention, l'enveloppe extérieure en matériau composite a été réalisée au préalable. On connait de nombreux procédés permettant d'obtenir une enveloppe extérieure en matériau composite.

On peut notamment se référer au brevet FR-2 198 817 qui concerne un procédé pour l'obtention de corps cylindriques creux. Dans ce procédé, on utilise un moule à axe horizontal et tournant à une vitesse donnée déterminant une accélération centrifuge supérieure à 1 g. Ainsi, toutes les matières introduites à l'intérieur du moule par l'intermédiaire de dispositifs se déplaçant axialement et longitudinalement dans celui-ci, se répartissent en couches cylindriques, coaxiales avec le moule et les unes avec les autres. Le procédé consiste donc à former plusieurs couches différentes, pouvant être composées de résine thermodurcissable et de fibres de renfort ou encore de résine thermodurcissable et d'une matière inerte. Ce procédé permet d'obtenir des corps cylindriques creux dont les dimensions de la surface interne ne sont pas parfaitement contrôlables. Il n'est donc utilisable que dans le cas où le procédé selon l'invention peut être mis en oeuvre avec de tels corps pour enveloppe extérieure. C'est notamment le cas lorsque le noyau est compressible.

On peut également citer les procédés utilisant la technique de l'enroulement filamentaire. Selon cette technique, on peut former un réseau de fibres en enroulant hélicoïdalement des fibres individuelles imprégnées de résine sur un mandrin. On peut également réaliser un enroulement longitudinal et circonférentiel de fibres. Dans ce cas, on peut prévoir de placer à chaque extrémité d'un mandrin-support une bague comportant des picots. Des fibres peuvent alors être bobinées longitudinalement en continu, les retours des fibres étant effectuées autour des picots portés par les bagues. Ainsi, une fibre longitudinale ou une nappe de fibres longitudinales vient contourner un picot puis, selon une petite trajectoire circonférentielle, va atteindre un autre picot voisin pour le contourner lui-même et effectuer un retour pour repartir longitudinalement au-dessus du mandrin. A la suite d'un tel enroulement longitudinal, on peut prévoir un enroulement circonférentiel. Dans la mesure où les fibres enroulées sont pré-imprégnées de résine, il suffit de procéder à une polymérisation pour obtenir une enveloppe en matériau composite. Dans la mesure où, comme nous le verrons plus précisément dans la suite de la description, une des étapes du procédé selon l'invention consiste à mettre en expansion radiale l'enveloppe externe en matériau composite, et ceci, progressivement dans le sens axial, c'est-à-dire au fur et mesure de l'introduction du noyau dans celle-ci, on comprend que, lorsque l'enveloppe externe est réalisée à partir d'enroulements longitudinaux et circonférentiels de fibres, il est nécessaire que le nombre de couches de fibres enroulées circonférentiellement soit supérieur ou égal au nombre de couches de fibres enroulées longitudinalement.

On peut également se référer à la demande de brevet WO 85/04380 relative à des dispositifs pour le stockage et le transport de fluide sous pression. Un matériau composite est enroulé hélicoïdalement sur les parties cylindriques de ces dispositifs. Ce document montre également que l'épaisseur du matériau composite peut être variable. Ceci peut notamment être obtenu en commandant la bobineuse de façon appropriée, de telle sorte qu'un nombre plus important de couches de fibres soit obtenu dans des zones déterminées. Ainsi que nous le verrons dans la suite de la description, il peut être intéressant d'obtenir des enveloppes extérieures présentant des épaisseurs variables. La technique qui vient d'être décrite pourra dans ce cas être avantageusement utilisée.

Comme illustré à la figure 1, l'enveloppe extérieure 4 présente une forme tronconique 11 sur son extrémité opposée à celle destinée à être placée dans le décrochement 3A de l'embase 1 qui est fixe. Cette forme tronconique 11 peut être obtenue par usinage de l'enveloppe extérieure, après sa réalisation. Elle peut aussi être obtenue directement lors de la réalisation de l'enveloppe, par exemple en réalisant un enroulement filamentaire sur un mandrin présentant, dans une zone déterminée, une forme tronconique.

Dans l'exemple représenté à la figure 1, le noyau présente également à une de ses extrémités une forme tronconique 12. Celle-ci est réalisée de façon à être complémentaire de la partie tronconique 11 de l'enveloppe extérieure 4.

On comprend que la présence de ces formes tronconiques 11 et 12 complémentaires facilite l'introduction du noyau 6 dans l'enveloppe externe 4. Ces formes tronconiques sont réalisées sur l'enveloppe externe 4 et le noyau 6 avant que l'enveloppe et le noyau ne soient alignés en les centrant sensiblement l'un vis-à-vis de l'autre, de façon à ce qu'ils se trouvent dans la position illustrée à la figure 1.

Lorsque l'enveloppe externe 4 et le noyau 6 sont dans cette position, on exerce un effort de traction préalable sur la tige coulissante 5, dans le sens indiqué par la flèche à l'aide de moyens de traction appropriés. On exerce donc ainsi un effort de traction sur le noyau 6 en direction de l'enveloppe 4, de façon à assurer une étanchéité convenable entre les parties en contact de chacune des extrémités du noyau 6 et de l'enveloppe 4. Tandis que cet effort de traction est maintenu, ce qui permet de maintenir les formes tronconiques 11 et 12 en contact étanche l'une contre l'autre, on commande de façon appropriée le dispositif générant un fluide sous pression de façon à ce que le fluide sous pression soit injecté dans le ou les canal(aux) longitudinal(aux) 7. Par l'intermédiaire du ou des canal(aux) radial(aux) 8, le fluide sous pression est ainsi introduit dans l'espace 10 ménagé entre la surface externe de la tige coulissante 5 et la surface interne de l'enveloppe extérieure 4.

Comme l'illustre de façon plus précise la figure 2, le fluide sous pression injecté dans l'espace 10 permet éventuellement de restreindre la section externe sur une zone du noyau 6 et d'augmenter la section interne sur une zone correspondante de l'enveloppe 4 jusqu'à ce qu'elle soit supérieure à la section externe du noyau 6. On continue d'exercer un effort de traction approprié sur le noyau 6 de manière à pouvoir introduire le noyau 6 dans la zone correspondante de l'enveloppe 4. Puis, le fluide sous pression restreint éventuellement la section externe du noyau 6 sur la zone suivante, et augmente la section interne de l'enveloppe 4 sur la zone suivante correspondante pour faire pénétrer le noyau 6 dans la zone de l'enveloppe 4. Ainsi, le fluide sous pression permet de restreindre le noyau 6 et d'augmenter la section interne de l'enveloppe 4 au fur et à mesure de l'emmanchement du noyau 6 dans l'enveloppe 4 ; c 'est-à-dire que le fluide sous pression agit progressivement dans le sens axial lors du déplacement du noyau 6. On comprend que la valeur de l'effort de traction exercé sur la tige coulissante doit être supérieure à la valeur des forces s'opposant à la pénétration du noyau dans l'enveloppe, ces forces résultant notamment du frottement du noyau sur la paroi interne de l'enveloppe 4 et de la pression exercée sur la partie tronconique 12 du noyau par le fluide sous pression.

Dans l'exemple représenté à la figure 1, l'enveloppe externe 4 est en matériau composite et le noyau 6 est métallique. On comprend donc que dans ce cas particulier, l'introduction du noyau dans l'enveloppe est obtenue uniquement grâce à la mise en expansion de l'enveloppe en matériau composite.

Le procédé est également applicable à des noyaux non métalliques et en particulier à des noyaux compressibles, notamment des noyaux creux. Dans ce cas, l'injection de fluide sous pression permet de mettre en compression le noyau. Elle permet de plus de mettre en expansion l'enveloppe extérieure dans la mesure où celle-ci n'est pas rigide.

L'enveloppe externe en matériau composite possède une capacité d'expansion déterminée. La capacité d'expansion peut être adaptée en fonction des matériaux utilisés pour réaliser l'enveloppe extérieure et du procédé de réalisation proprement dit. En particulier, lorsque l'enveloppe extérieure est obtenue par enroulement filamentaire, on peut choisir de façon appropriée le type d'enroulement utilisé pour chaque couche ainsi que les angles de bobinage.

Il a été précisé précédemment que l'effort de traction exercé sur la tige coulissante 5 dépend du frottement du noyau sur la paroi interne de l'enveloppe 4. De façon à diminuer les forces de frottement et en conséquence l'effort de traction exercé sur la tige, on peut choisir pour le fluide injecté un fluide lubrifiant. On peut notamment choisir d'utiliser des résines polymérisables.

On peut également noter que l'on peut diminuer la force exercée par le fluide sous pression sur la forme tronconique 12 du noyau 6 afin de diminuer en conséquence l'effort de traction exercé sur la tige coulissante 5. La réduction de cette force due à la pression est obtenue en limitant le plus possible la différence entre le diamètre de la tige coulissante 5 et le diamètre du noyau 6.

Après introduction complète du noyau dans l'enveloppe extérieure 4 en matériau composite, on commande le dispositif générant le fluide sous pression, de façon à arrêter l'injection de ce fluide à travers la tige coulissante 5, de sorte que l'enveloppe 4, qui n'est plus soumise à une pression interne, peut terminer de se rétracter radialement autour du noyau 6 en le frettant.

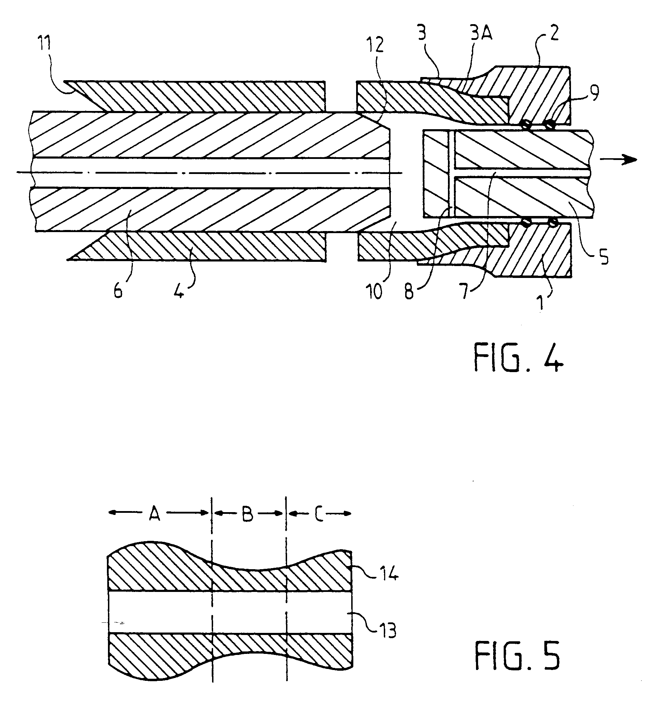

Comme on peut le voir sur la figure 4, on procède ensuite à la découpe de la partie perdue de l'enveloppe 4 qui est maintenue par l'embase 1.

On comprend qu'une fine pellicule de fluide peut subsister entre la surface interne de l'enveloppe 4 et le noyau 6. C'est pourquoi l'utilisation d'une résine polymérisable comme fluide lubrifiant peut être particulièrement avantageuse. En effet, après introduction complète du noyau dans l'enveloppe, arrêt de l'injection du fluide, et contraction complète de l'enveloppe 4, on peut procéder à une polymérisation de la fine pellicule de résine résiduelle présente entre la surface interne de l'enveloppe et la surface externe du noyau. On assure ainsi le collage du noyau 6 sur la paroi interne de l'enveloppe 4. Le frettage et le maintien sous pression du noyau par l'enveloppe en matériau composite se trouvent donc renforcés.

Le procédé selon l'invention permet donc la mise en expansion de l'enveloppe extérieure et/ou la mise en compression du noyau. Ces modifications de la section de l'enveloppe et du noyau peuvent être quantifiées de la façon suivante.

On considère tout d'abord le cas général où le procédé selon l'invention permet à la fois l'expansion de l'enveloppe et la compression du noyau grâce à une pression interne $P_1$ régnant entre la surface externe du noyau et la surface interne de l'enveloppe. Dans l'exemple des figures 1 et 2, cette pression $P_1$ est la pression du fluide dans l'espace 10.

En désignant par :

$O_0$     la section interne de l'enveloppe en matériau composite au repos,

$O'_0$     la section interne de l'enveloppe soumise à la pression interne $P_1$,

$O''_0$     la section interne de frettage de l'enveloppe sur le noyau

Le facteur d'expansion $K_0$ de l'enveloppe est :

$$K_0 = \frac{O'_0 - O_0}{O_0 \quad P_1}$$

De même, en désignant par :

$O_2$     la section externe du noyau au repos,

$O'_2$     la section externe du noyau soumis à la pression externe $P_1$,

$O''_2$ la section externe du noyau fretté par l'enveloppe extérieure.

Le facteur de compression $K_2$ du noyau est :

$$K_2 \quad \frac{O'_2 \quad - \quad O_2}{O_2 \quad P_1}$$

Lorsque l'enveloppe est soumise à la pression $P_1$, on introduit le noyau si :

$O'_0 > O'_2$

Il y aura frettage du noyau par l'enveloppe si :

$O_2 > O_0$

Après suppression de la pression $P_1$, la section interne de l'enveloppe se fixe à la valeur $O''_2$ avec $O''_2 = O''_0$ et exerce un effet de frettage sur le noyau.

L'enveloppe en matériau composite sera alors maintenue en tension et le noyau sera maintenu en compression.

La pression P de frettage à l'interface du noyau et de l'enveloppe extérieure sera égale à :

$$P \quad = \quad \frac{O_2 \quad -O_0}{(K_0 \ O_0 \quad - \quad K_2 \ O_2)}$$

Dans le cas particulier où le noyau est rigide et ne peut donc pas être mis en compression, le procédé ne permet que l'expansion de l'enveloppe extérieure en matériau composite.

Donc, sous l'effet de la pression $P_1$, il faut que $O''_0 > O_2$ et il y aura serrage si $O_2 > O_0$

Le noyau étant rigide, on aura $O_2 = O'_2 = O''_2$ et $K_2 = 0$

En conséquence, la pression à l'interface P est égale à

$$P \quad = \frac{O_2 \quad - \quad O_0}{K_0 \quad O_0}$$

On peut aussi envisager le cas particulier où l'enveloppe est rigide et ne peut pas être mise en expansion, le procédé permet de comprimer le noyau.

Aussi, sous la pression $P_1$ il faut que $O'_2 < O_0$ et il y aura frettage si $O_2 > O_0$

L'enveloppe étant rigide, on a $O_0 = O'_0 = O''_0$ et de ce fait la pression à l'interface du noyau et de l'enveloppe est égale à

$$P \quad = \quad \frac{O_2 \quad - \quad O_0}{- \quad K_2 \quad O_2}$$

Dans l'exemple représenté aux figures 1 et 2, la surface interne de l'enveloppe et la surface externe du noyau sont cylindriques. De plus, l'épaisseur de l'enveloppe externe est constante tout au long de son axe. Il est bien certain que le procédé selon l'invention n'est pas applicable uniquement à ce type de noyau et d'enveloppe.

Ce procédé est tout à fait applicable à une enveloppe et à un noyau tels que la surface externe du noyau et/ou la surface interne et/ou externe de l'enveloppe est(sont) une surface de révolution. Ainsi, la surface interne et/ou externe de l'enveloppe et/ou la surface externe du noyau peut(peuvent) être tronconique(s). On comprend que dans ce cas, il n'est pas nécessaire de pratiquer les formes tronconiques sur une extrémité de l'enveloppe et du noyau. Il est aussi tout à fait possible de fretter et de maintenir sous pression, conformément au procédé selon l'invention, un noyau présentant une forme quelconque par une enveloppe présentant elle aussi une forme quelconque.

On constate de plus que dans l'exemple représenté à la figure 1, la surface interne de l'enveloppe et la surface externe du noyau sont homothétiques. Le procédé selon l'invention peut également être utilisé lorsque ces surfaces ne sont pas homothétiques. On comprend que dans ce cas, le frettage et le maintien sous pression du noyau sont toujours assurés par l'enveloppe extérieure, par contact direct de l'enveloppe extérieure sur au moins une partie de la périphérie du noyau.

Il peut être avantageux d'assurer le frettage et le maintien sous pression du noyau par contact direct de l'enveloppe externe sur toute la périphérie de celui-ci. Dans ce cas on peut prévoir, avant d'aligner le noyau et l'enveloppe, de réaliser un habillage du noyau de façon à ce que la surface interne de l'enveloppe et la surface externe du noyau habillé soient rendues homothétiques.

L'enveloppe 4 peut éventuellement être maintenue avec un jeu plus ou moins important par un tube de calibrage extérieur de l'enveloppe. Ce tube de maintien 15, représenté sur la figure 2, permet pour des enveloppes de faible épaisseur d'éviter le problème de création de bourrelets, d'évasement ou de déformations dues à un frottement trop important lors des efforts d'emmanchement.

Le procédé selon l'invention peut être mis en oeuvre lorsque l'enveloppe externe n'est pas un corps de révolution. Dans ce cas, l'expansion de l'enveloppe sous l'effet de l'injection du fluide sous pression n'est pas uniforme et des déformations peuvent apparaître. C'est pourquoi il est alors avantageux de maintenir extérieurement l'enveloppe pendant l'injection du fluide sous pression, par l'intermédiaire de dispositifs appropriés quine seront pas ici décrits plus en détails, pour limiter sa déformation.

A titre d'exemple, on a représenté à la figure 5 un noyau cylindrique 13 fretté et maintenu en position par une enveloppe extérieure 14 dont la surface interne est cylindrique mais qui présente une épaisseur variable.

Comme indiqué précédemment, on connait des procédés permettant de réaliser, par enroulement filamentaire, une telle enveloppe en matériau composite.

Cette enveloppe 14 comprend grossièrement trois zones A, B, C, l'épaisseur de la zone A étant supérieure à celle de la zone C, elle-même supérieure à celle de la zone B. L'épaisseur de ces zones est choisie de façon à ce que l'enveloppe 14 frette et maintienne sous pression le noyau 13 alors que celui-ci est soumis à des sollicitations plus importantes dans la zone A que dans la zone C, les sollicitations dans la zone C étant elles-mêmes plus importantes que dans la zone B.

Dans le cas particulier où le noyau est cylindrique et où les sollicitations auxquelles il est soumis vont en décroissant d'une de ses extrémités à l'autre, on peut notamment utiliser une enveloppe dont la surface interne est cylindrique et dont la surface externe est tronconique, la section de cette surface externe décroissant depuis l'extrémité du noyau soumise aux plus fortes sollicitations internes jusqu'à l'autre extrémité.

On peut de même envisager le cas particulier où le noyau est tronconique et où les sollicitations auxquelles il est soumis vont en décroissant de l'extrémité présentant la section la plus faible à celle présentant la plus grande section. On peut alors utiliser une enveloppe dont la surface interne est tronconique et dont la surface externe est cylindrique, la surface interne de l'enveloppe et la surface externe du noyau étant homothétiques.

On comprend que l'on peut réaliser une enveloppe extérieure correspondant aux sollicitations auxquelles est soumis le noyau en adaptant son épaisseur mais aussi en utilisant des matériaux différents selon les zones correspondantes du noyau.

A titre d'exemple, le procédé selon l'invention permet de fretter un noyau à une pression d'environ 1400 bar, avec une enveloppe en matériau composite dimensionnée pour présenter une résistance à la rupture de 2000 bar.

On peut constater enfin que le procédé selon l'invention permet d'ajuster la pression de frettage avec une précision d'environ ± 10 %, la valeur maximum de la pression de frettage pouvant atteindre 70 % de la résistance à la rupture de l'enveloppe en matériau composite.

Les signes de référence insérés après les caractéristiques techniques énoncées dans les revendications, ont pour seul but de faciliter la compréhension de ces dernières et ne peuvent avoir en aucun cas pour effet de limiter l'invention aux modes particuliers de réalisation qui viennent d'être décrits.

**Revendications**

1.   Procédé pour fretter et maintenir sous pression un noyau (6) par une enveloppe (4) en matériau composite, ladite enveloppe (4) en matériau composite ayant une section interne qui est, avant introduction du noyau (6), inférieure à la section externe du noyau (6), caractérisé en ce que ce procédé consiste à :
maintenir l'une des extrémités de l'enveloppe (4) à l'aide d'une embase (1);
aligner ledit noyau (6) et ladite enveloppe (4), par son autre extrémité, en les centrant sensiblement l'un vis-à-vis de l'autre;
exercer un effort de traction préalable sur ledit noyau (6) en direction de l'enveloppe (4) et prévoir, dans le cas d'un noyau (6) creux et ouvert dans le sens axial, des moyens d'obstruction étanche, de façon à assurer une étanchéité convenable entre la partie en contact de chacune des extrémités du noyau (6) et de l'enveloppe (4);
injecter un fluide sous pression dans ladite enveloppe (4) et en direction dudit noyau (6), afin de créer une pression entre le noyau (6) et l'enveloppe (4) et afin d'augmenter progressivement, en se déplaçant dans le sens axial, la section de l'enveloppe (4) et, éventuellement, de réduire la section du noyau (6), et simultanément continuer d'exercer un effort de traction sur ledit noyau (6), de façon à introduire au fur et à mesure ledit noyau (6) dans ladite enveloppe (4) ;
arrêter l'injection de fluide après introduction complète du noyau (6) dans l'enveloppe (4);
découper la partie perdue de l'enveloppe (4) tenue par l'embase (1).

2.   Procédé selon la revendication 1, caractérisé en ce qu'il consiste de plus, avant d'aligner et de centrer ladite enveloppe et ledit noyau, à réaliser des formes coniques (11, 12) complémentaires sur les parties en contact, la forme conique (11) étant sur l'extrémité de l'enveloppe (4) et la forme conique (12) étant sur l'extrémité du noyau (6), de manière que le centrage et l'étanchéité convenable entre le noyau (6) et l'enveloppe (4) soient réalisés en engageant les formes coniques (11) et (12) l'une dans l'autre.

3. Procédé selon la revendication 1, caractérisé en ce que la surface interne et/ou la surface externe de l'enveloppe est une surface de révolution.

4. Procédé selon l'une des revendications 1 ou 3, caractérisé en ce que la surface externe du noyau est une surface de révolution.

5. Procédé selon l'une des revendications 3 ou 4, caractérisé en ce qu'au moins une desdites surfaces est cylindrique.

6. Procédé selon l'une des revendications 3 à 5, caractérisé en ce qu'au moins une desdites surfaces est tronconique.

7. Procédé selon l'une des revendications 1 et 3 à 6, caractérisé en ce que la surface interne de l'enveloppe et la surface externe du noyau sont homothétiques.

8. Procédé selon l'une des revendications 1 et 3 à 6, caractérisé en ce que, lorsque la surface interne de l'enveloppe et la surface externe du noyau ne sont pas homothétiques, il consiste de plus, avant s'aligner ledit noyau et ladite enveloppe, à réaliser un habillage dudit noyau, de telle sorte que la surface interne de l'enveloppe et la surface externe du noyau soient homothétiques.

9. Procédé selon l'une des revendications précédentes, caractérisé en ce que le fluide sous pression est un fluide lubrifiant.

10. Procédé selon la revendication 9, caractérisé en ce que le fluide sous pression est une résine polymérisable.

11. Procédé selon la revendication 10, caractérisé en ce qu'il consiste de plus, après introduction au noyau dans l'enveloppe et arrêt de l'injection lu fluide sous pression, à polymériser la résine résiduelle présente entre la surface interne de ladite enveloppe et la surface externe du noyau.

12. Procédé selon l'une des revendications précédentes, caractérisé en ce qu'on réalise ladite enveloppe en enroulant des fibres imprégnées de résine polymérisable sur un support, puis en les polymérisant.

13. Procédé selon la revendication 12, caractérisé en ce que ladite enveloppe comprend au moins une couche de fibres enroulées.

14. Procédé selon l'une des revendications 12 ou 13, caractérisé en ce que l'épaisseur de ladite enveloppe est variable.

15. Procédé selon l'une des revendications 12 à 14, caractérisé en ce que lesdites fibres sont des fibres organiques ou minérales à haute résistance mécanique, telles que des fibres de carbone, de verre, de silice, de bore ou aramides.

16. Procédé selon l'une des revendications précédentes, caractérisé en ce que l'enveloppe (4) est munie d'un tube de maintien (15).

17. Procédé selon l'une des revendications précédentes, caractérisé en ce que, lorsque l'enveloppe n'est pas un corps de révolution, le procédé consiste de plus à maintenir ladite enveloppe durant l'injection de fluide sous pression, pour limiter sa déformation.

18. Appareillage pour la mise en oeuvre du procédé selon l'une des revendications 1 à 17, caractérisé en ce qu'il comprend une tige (5) coulissante de diamètre inférieur à la section de l'enveloppe (4), destinée à être raccordée au noyau (6) et à être placée dans l'enveloppe (4), de telle sorte qu'un espace (10) est ménagé entre la surface externe de ladite tige (5) et la surface interne de ladite enveloppe (4), ladite tige (5) étant de plus percée d'au moins un canal longitudinal (7) et au moins un canal radial (8), ledit canal longitudinal étant en communication avec ledit espace par l'intermédiaire dudit canal radial, ledit appareillage comprenant de plus un système (9) assurant l'étanchéité entre l'enveloppe (4) et la tige (5), des moyens pour exercer un effort de traction sur la tige (5) par rapport à l'enveloppe (4), et un dispositif générant un fluide sous pression, ledit dispositif étant relié au(x)dit(s) canal(aux) longitudinal(aux) pour permettre l'introduction dudit fluide sous pression dans ledit espace.

## Claims

1. Method for hooping and maintaining in compression a core (6) by a sheath (4) made of a composite material, the said sheath (4) made of a composite material having an internal cross-section which is, before insertion of the core (6), less than the external cross-section of the core (6), characterized in that this method consists in :
- maintaining one of the ends of the sheath (4) with a base piece (1)
- aligning the said core (6) and the said sheath (4) with the other end thereof by substantially centering them one with respect to the other;
- exerting a prior tensile force over the said core (6) in the direction of the sheath (4) and providing, in the case of a hollow and open core (6) in the axial direction, sealing means in such a manner as to provide a suitable sealing between the portion in contact of each of the ends of the core (6) and of the sheath (4);
- injecting a pressurized fluid into the said sheath (4) and in the direction of the said core (6), in order to provide a compression between the core (6) and the sheath (4) and in order to increase progressively, by being displaced in the axial direction, the cross-section of the sheath (4) and, where appropriate, to reduce the cross-section of the core (6) and simultaneously to continue to exert a tensile force over the said core (6), in such a manner as to insert the said core (6) gradually into the said sheath (4);
- stopping the fluid injection after complete insertion of the core (6) into the sheath (4);
- cutting off the expendable portion of the sheath (4) held by the base piece (1).

2. Method according to claim 1, characterized in that it also consists, before aligning and centering the said sheath and the said core, in producing complementary conical shapes (11, 12) over the portions in contact, the conical shape (11) being on the end of the sheath (4) and the conical shape (12) being on the end of the core (6), in such a manner that the centering and the suitable sealing between the core (6) and the sheath (4) are carried out by engaging the conical shape (11) and (12) into each other.

3. Method according to claim 1, characterized in that the internal surface and/or the external surface of the sheath is a surface of revolution.

4. Method according to one of claims 1 or 3, characterized in that the external surface of the core is a surface of revolution.

5. Method according to one of claims 3 or 4, characterized in that at least one of the said surfaces is cylindrical.

6. Method according to one of claims 3 to 5, characterized in that at least one of the said surfaces is frustoconical.

7. Method according to one of claims 1 and 3 to 6, characterized in that the internal surface of the sheath and the external surface of the core are homothetic.

8. Method according to one of claims 1 and 3 to 6, characterized in that, when the internal surface of the sheath and the external surface of the core are not homothetic, it also consists, before aligning the said core and the said sheath, in producing a covering of the said core, in such a manner that the internal surface of the sheath and the external surface of the core are homothetic.

9. Method according to one of the preceding claims, characterized in that the pressurized fluid is a lubricating fluid.

10. Method according to claim 9, characterized in that the pressurized fluid is a polymerizable resin.

11. Method according to claim 10, characterized in that it also consists, after insertion of the core into the sheath and stopping the injection of the pressurized fluid, in polymerizing the residual resin present between the internal surface of the said sheath and the external surface of the core.

12. Method according to one of the preceding claims, characterized in that the said sheath is produced by winding fibers impregnated with polymerizable resin over a support and then polymerizing them.

13. Method according to claim 12, characterized in that the said sheath comprises at least one layer of wound fibers.

14. Method according to one of claims 12 or 13, characterized in that the thickness of the said sheath is variable.

15. Method according to one of claims 12 to 14, characterized in that the said fibers are organic or mineral fibers having high mechanical strength, such as carbon, glass, silica, boron or aramid fibers.

16. Method according to one of the preceding claims, characterized in that the sheath (4) is equipped with a maintaining tube (15).

17. Method according to one of the preceding claims, characterized in that, when the sheath is not a body of revolution, the method also consists in maintaining the said sheath during the injection of pressurized fluid in order to limit its deformation.

18. Apparatus for carrying out the method according to one of claims 1 to 17, characterized in that it comprises a sliding rod (5) of diameter less than the cross section of the sheath (4), intended to be connected to the core (6) and to be placed inside the sheath (4), in such a manner that a space (10) is provided between the external surface of the said rod (5) and the internal surface of the said sheath (4), the said rod (5) also being pierced by at least one longitudinal channel (7) and at least one radial channel (8), the said longitudinal channel being in communication with the said space by means of the said radial channel, the said apparatus also comprising a system (9) providing the sealing between the sheath (4) and the rod (5), means for exerting a tensile force on the rod (5) in relation to the sheath (4) and a device generating a pressurized fluid, the said device being connected to the said longitudinal channel(s) in order to permit the injection of the said pressurized fluid into the said space.

**Patentansprüche**

1. Verfahren zum Ummanteln und unter Druck Halten eines Kerns (6) durch eine Umhüllung (4) aus zusammengesetztem Material, wobei die Umhüllung (4) aus zusammengesetztem Material einen inneren Querschnitt hat, der vor Einführung des Kerns kleiner als der äußere Querschnitt des Kerns (6) ist, **dadurch gekennzeichnet**, daß das Verfahren besteht in: Halten eines der Enden der Umhüllung (4) mittels eines Sockels (1); Ausrichten des Kerns (6) und der Umhüllung (4) an ihrem anderen Ende, indem diese im wesentlichen zueinander zentriert werden; Ausüben einer vorangehenden Zugkraft auf den Kern (6) in Richtung der Umhüllung (4), und im Fall eines hohlen und in axialer Richtung offenen Kerns (6) vorsehen von dichten Verschlußmitteln, dergestalt, daß eine angemessene Dichtung zwischen dem Berührungsbereich jedes der Enden des Kerns (6) und der Umhüllung (4) sichergestellt ist; Injizieren eines Fluids unter Druck in die Umhüllung (4) und in Richtung des Kerns (6), um einen Druck zwischen dem Kern (6) und der Umhüllung zu erzeugen und um den Querschnitt der Umhüllung (4) in axialer Richtung progressiv zu erhöhen und möglicherweise den Querschnitt des Kerns (6) zu verringern, und gleichzeitig fortlaufendes Ausüben einer Zugkraft auf den Kern (6), dergestalt, daß der Kern (6) in die Umhüllung (4) nach und nach eingeführt wird; Stoppen des Injizierens nach vollständigem Einführen des Kerns (6) in die Umhüllung (4); Abschneiden des überflüssigen Abschnitts der Umhüllung (4), der von dem Sockel (1) gehalten wird.

2. Verfahren nach Anspruch 1, **dadurch gekennzeichnet**, daß es zusätzlich darin besteht, vor dem Ausrichten und Zentrieren der Umhüllung und des Kerns konische komplementäre Formen (11,12) an den Berührungsstellen auszuführen, wobei die konische Form (11) an dem Ende der Umhüllung (4) vorliegt und die konische Form (12) an dem Ende des Kerns (6) vorliegt, derart, daß die Zentrierung und die angemessene Dichtheit zwischen dem Kern (6) und der Umhüllung (4) dadurch hergestellt wird, daß die konischen Formen (11) und (12) ineinander eingepaßt werden.

3. Verfahren nach Anspruch 1, **dadurch gekennzeichnet**, daß die innere und/oder die äußere Oberfläche der Umhüllung eine Rotationsoberfläche ist.

4. Verfahren nach einem der Ansprüche 1 oder 3, **dadurch gekennzeichnet**, daß die äußere Oberfläche des Kerns eine Rotationsoberfläche ist.

5. Verfahren nach einem der Ansprche 3 oder 4, **dadurch gekennzeichnet**, daß wenigstens eine der Oberflächen zylindrisch ist.

6. Verfahren nach einem der Ansprüche 3 - 5, **dadurch gekennzeichnet**, daß wenigstens eine der Oberflächen kegelstumpfförmig ist.

7. Verfahren nach einem der Ansprüche 1 und 3 - 6, **dadurch gekennzeichnet**, daß die innere Oberfläche der Umhüllung und die äußere Oberfläche des Kerns homothetisch sind.

8.  Verfahren nach einem der Ansprüche 1 und 3 - 6,
    **dadurch gekennzeichnet**,
    daß dann, wenn die innere Oberfläche der Umhüllung und die äußere Oberfläche des Kerns nicht homothetisch sind, es weiterhin darin besteht, vor dem Ausrichten des Kerns und der Umhüllung eine Verkleidung des Kerns derart auszuführen, daß die innere Oberfläche der Umhüllung und die äußere Oberfläche des Kerns homothetisch werden.

9.  Verfahren nach einem der vorhergehenden Ansprüche,
    **dadurch gekennzeichnet**,
    daß das unter Druck stehende Fluid ein schmierendes Fluid ist.

10. Verfahren nach Anspruch 9,
    **dadurch gekennzeichnet**,
    daß daß das unter Druck stehende Fluid ein polymerisierbares Harz ist.

11. Verfahren nach Anspruch 10,
    **dadurch gekennzeichnet**,
    daß daß es weiterhin darin besteht, nach dem Einführen des Kerns in die Umhüllung und Stoppen der Injektion des unter Druck stehenden Fluids das restliche Harz zu polymerisieren, welches zwischen der inneren Oberfläche der Umhüllung und der äußeren Oberfläche des Kerns vorhanden ist.

12. Verfahren nach einem der vorangehenden Ansprüche,
    **dadurch gekennzeichnet**,
    daß die Verkleidung dadurch hergestellt wird, daß mit polymerisierbarem Harz imprägnierte Fasern auf einen Träger gerollt werden und dann polymerisiert werden.

13. Verfahren nach Anspruch 12,
    **dadurch gekennzeichnet**,
    daß die Umhüllung wenigstens eine aufgerollte Faserschicht umfaßt.

14. Verfahren nach einem der Ansprüche 12 oder 13,
    **dadurch gekennzeichnet**,
    daß die Dicke der Umhüllung variabel ist.

15. Verfahren nach einem der Ansprüche 12 - 14,
    **dadurch gekennzeichnet**,
    daß die Fasern organische oder mineralische Fasern mit hoher mechanischer Widerstandsfähigkeit sind, wie Fasern aus Kohlenstoff, Glas, Silizium, Bor oder Aramiden.

16. Verfahren nach einem der vorangehenden Ansprüche,
    **dadurch gekennzeichnet**,
    daß die Umhüllung (4) mit einem Versteifungsrohr (15) versehen ist.

17. Verfahren nach einem der vorangehenden Ansprüche,
    **dadurch gekennzeichnet**,
    daß, wenn die Umhüllung kein Rotationskörper ist, das Verfahren weiterhin darin besteht, die Umhüllung während der Injektions des unter Druck stehenden Fluids zu versteifen, um seine Verformung zu begrenzen.

18. Vorrichtung zum Ausüben des Verfahrens nach einem der Ansprüche 1 - 17,
    **dadurch gekennzeichnet**,
    daß sie eine verschiebbare Stange (5) kleineren Durchmessers als der Querschnitt der Umhüllung (4) umfaßt, die dazu bestimmt ist, mit dem Kern (6) verbunden und in der Umhüllung (4) angeordnet zu werden, dergestalt, daß ein Zwischenraum (10) zwischen der äußeren Oberfläche der Stange (5) und der inneren Oberfläche der Umhüllung (4) gebildet wird, wobei die Stange (5) außerdem mit wenigstens einem Längskanal (7) und wenigstens einem Radialkanal (8) durchbrochen ist, wobei der Längskanal mit dem Zwischenraum über dem Radialkanal in Verbindung steht, daß die Vorrichtung weiterhin ein System (9) umfaßt, welches die Dichtheit zwischen der Umhüllung (4) und der Stange (5) sicherstellt, Mittel zum Ausüben einer Zugkraft auf die Stange (5) bezüglich der Umhüllung (4) sowie eine Einrichtung umfaßt, die ein Fluid unter Druck abgibt, wobei die Einrichtung an den Längskanal bzw. die Längskanäle angeschlossen ist, um die Eingabe des Fluid unter Druck in den Zwischenraum zu erlauben.

FIG.1

FIG. 2

FIG. 3

FIG. 4

FIG. 5

15